# EUROPEAN PATENT APPLICATION

(11) **EP 2 360 122 A1**
(43) Date of publication of application: **24.08.2011**
(21) Application number: 11154480.5
(22) Date of filing: 15.02.2011
(51) Int. Cl.: C02F 1/00, A47J 31/60

(54) **A percolating filtering device and an additional filter for same**

(30) Priority: 16.02.2010 IT PD20100011 U
(71) Applicant: Laica S.p.a., 36021 Barbarano Vicentino (VI) (IT)
(72) Inventor: Moretto, Maurizio, 36100, Vicenza (IT)
(74) Representative: Cantaluppi, Stefano

(57) **Abstract**

A separating element for a percolating filtering device, suitable for separating the filtering device into a first and a second bowl, comprises a receiving seat for a replaceable cartridge, wherein there is defined in the seat a passage through which the liquid filtered by the cartridge is discharged into the second bowl, and which comprises an additional filter removably inserted in the manner of a stopper into said passage and capable of intercepting the flow emerging therefrom in order to subject it to additional filtration.

## Description

The present invention relates to a separating element for a percolating filtering device of the type with replaceable cartridge according to the preamble of the main claim.

Filtering devices including the above-mentioned features are widely used for filtering drinking water for domestic use. They are generally produced in the form of jugs, kettles, tisane infusers and the like. A typical example of this technology is described in W02005118481.

In these devices the filter cartridge contains a filter bed of active carbon, ion exchange resins or other material generally in granular form. Grilles and other retaining means are provided in the cartridge in order to prevent the granular material of the filter from flowing with the filtered liquid and ending up in the bowl for collection of same.

Since the granulometry of the material which forms the filter bed is not in fact constant, it is however possible that particularly fine granules of the material may pass through the aforesaid grilles, ending up in the collection bowl for the filtered water. This problem is greatly increased in the initial phase of use of the cartridge, when the filter bed is still relatively dry and the granules are therefore thinner.

This fact, while not prejudicing the quality of the filtered water, nonetheless represents an unwelcome phenomenon and makes an unfavourable impression on the user, who has the visual perception of drinking contaminated water, in spite of the filtration which has taken place.

The principal aim of the invention is that of providing a filtering device and an additional filter for same, structurally and functionally designed to prevent the occurrence of the above-mentioned phenomenon.

These and other aims which will become clearer hereinafter are achieved by the invention by means of a filtering device and an additional filter produced in accordance with the attached claims.

The features and advantages of the invention will become clear from the following detailed description of a preferred, but not exclusive, exemplary embodiment thereof, illustrated by way of non-limiting example with reference to the appended drawings in which:

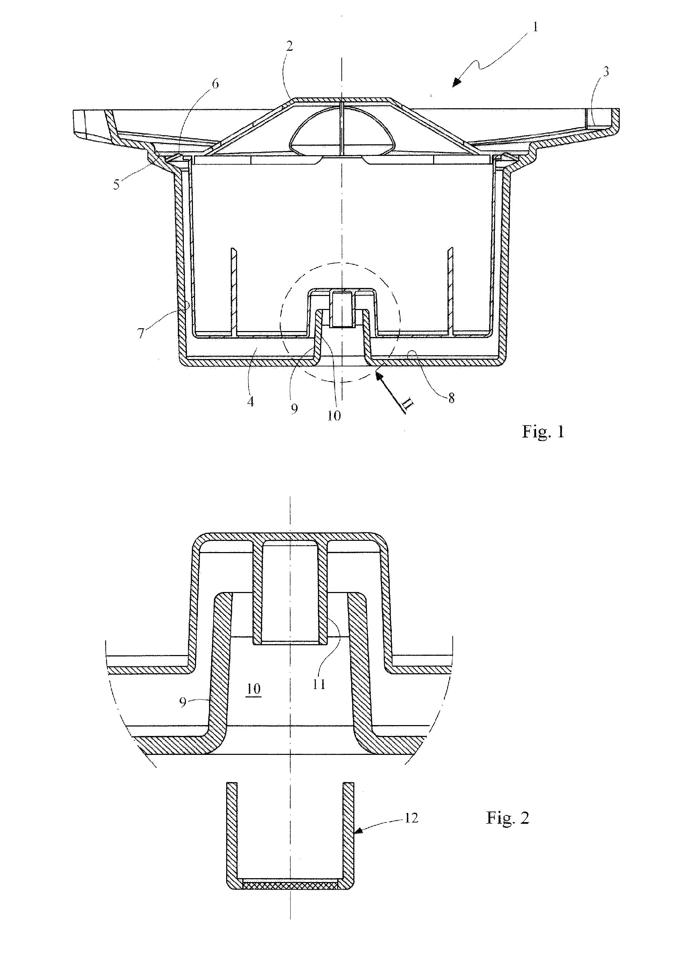

- Figure 1 is a schematic sectional view of a filtering device of the jug type, shown only partially and incorporating the present invention;
- Figure 2 is a sectional view on an enlarged scale, and with parts detached, of the detail indicated by the arrow II in Figure 1;

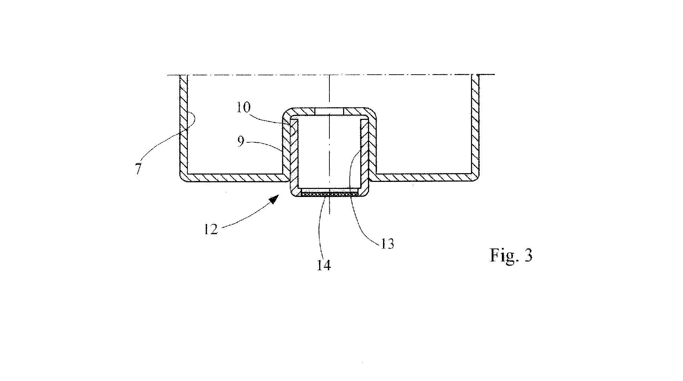

- Figure 3 is a view corresponding to that of Figure 2 with parts assembled.

In the drawings, the reference 1 indicates a percolating filtering device, illustrated only partially in the drawing, of the type with replaceable cartridge 2.

The filtering device 1 comprises a separating element 3 which separates from each other a first and a second collecting bowl, respectively for the water to be filtered and for the filtered water. The element 3 is normally in the shape of a hopper and is housed in a jug, for example of the type described in W02009-012832.

Defined in the separating element 3 is a seat 4 for receiving the cartridge 2.

The seat 4 includes an annular recess 5 in which an annular gasket 6 of the cartridge 2 is removably received in a sealed manner so that, when the cartridge 2 is fitted into the seat 4, all the flow of liquid to be filtered is constrained to pass through the filter bed contained in the cartridge 2.

The seat 4 further comprises a lateral wall 7 and a bottom wall 8. From the bottom wall 8 rises a tubular sleeve 9 which surrounds a recess 10. In the recess 10 a passage is defined through which the liquid filtered by the cartridge 2 is discharged via a small pipe 11 into the second collecting bowl for the filtered water.

An additional filter 12 is removably inserted in the manner of a stopper into the recess 10 to intercept the flow emerging from the pipe 11 in order to subject it to additional filtration for the purpose of retaining any granules which have escaped from the filter bed, preventing them from dropping into the second bowl.

The additional filter 12 comprises a tubular body 13 which can be engaged in a sealed manner in the passage of the recess 10, in such a manner as to effect the aforesaid insertion in the manner of a stopper, and a grille or mesh type filter 14 fitted into the tubular body 13 at the distal end thereof with respect to the passage. In this way a chamber defined by the recess 10 and by the tubular body 13 is formed in which the material retained by the grille type filter 14 accumulates. The sealed insertion of the filter 12 may be effected by providing an interference coupling between the body 13 and the recess, taking advantage of the relative deformability of the materials employed, in particular preferably plastics materials.

Provision is made for the additional filter to be integrated in the manufacturing of the filtering device 1 or sold separately from the latter as an accessory. As an alternative, provision is made for the filtering device and the additional filter to be able to be marketed in the form of a kit of conjoined or disjoined parts.

## Claims

1. A separating element (3) for a percolating filtering device (1), suitable for separating the filtering device (1) into a first and a second bowl, comprising a receiving seat (4) for a replaceable cartridge (2), there being defined in said seat (4) a passage (10) through which the liquid filtered by the cartridge (2) is discharged into the second bowl, **characterized in that** it comprises an additional filter (12) removably inserted in the manner of a stopper into said passage (10) and capable of intercepting the flow emerging therefrom in order to subject it to additional filtration.

2. A separating element (3) according to claim 1, wherein said additional filter (12) comprises a tubular body (13) engageable in a sealed manner in the passage (10) and a grille or mesh type filter (14) fitted into said tubular body (13).

3. A separating element (3) according to claim 2, wherein the grille or mesh type filter is placed at the distal end of the tubular body with respect to the passage.

4. A filtering device (1) comprising a separating element (3) according to one or more of the preceding claims, disposed in such a manner as to subdivide said device (1) into a first bowl for collecting water to be filtered and a second bowl for collecting filtered water.

5. An additional filter (12) as a component of the separating element (3) or of the filtering device (1) according to one or more of the preceding claims, said additional filter being arranged to be removably inserted in the manner of a stopper into said passage (10) and capable of intercepting the flow emerging from said passage in order to subject it to additional filtration.

6. A kit including a percolating filtering device (1) with a separating element (3) between a first and a second bowl, a receiving seat (4) for a replaceable cartridge (2) in said separating element (3), there being defined in said seat (4) a passage (10) through which the liquid filtered by said cartridge (2) is discharged into the second bowl, **characterized in that** it comprises an additional filter (12) removably inserted in the manner of a stopper into said passage (10) and capable of intercepting the flow emerging from said passage in order to subject it to additional filtration.
